(19) Europäisches Patentamt
European Patent Office
Office européen des brevets

(11) EP 1 117 196 B1

(12) EUROPEAN PATENT SPECIFICATION

(45) Date of publication and mention of the grant of the patent:
**25.09.2002 Bulletin 2002/39**

(51) Int Cl.[7]: **H04B 7/005**

(21) Application number: **01460001.9**

(22) Date of filing: **02.01.2001**

(54) **Method for generating a base band signal representative of the transmitted radiofrequency power, corresponding device and transmitting station**

Verfahren zur Erzeugung eines BasisbanSignals über die gesendete Hochfrequenz-Leistung, entsprechende Vorrichtung und Sendesstation

Procédé pour la génération d'un signal de bande de base représentant la puissance radiofréquence transmis, dispositif et station d'émission correspondantes

(84) Designated Contracting States:
**DE FR GB**

(30) Priority: **12.01.2000 FR 0000430**

(43) Date of publication of application:
**18.07.2001 Bulletin 2001/29**

(73) Proprietor: **Mitsubishi Electric Telecom Europe (S.A.)**
**92741 Nanterre Cedex (FR)**

(72) Inventor: **Milleret, Hervé**
**35000 Rennes (FR)**

(74) Representative: **Bentz, Jean-Paul et al**
**Cabinet Ballot**
**4 rue du Général Hoche**
**BP 855**
**56100 Lorient (FR)**

(56) References cited:
**WO-A-97/36382**
**US-A- 3 745 464**
**US-A- 5 287 555**

EP 1 117 196 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

This invention relates to a method for generating a base band signal representative of the power transmitted by a transmitting station. The main application of the invention is in the field of mobile radio telecommunication systems.

A mobile radio system is currently being standardized by the 3GPP ($3^{rd}$ Generation Partnership Project) committee. The CDMA (Code Division Multiple Access) technology used for this system consists of modulating each symbol as follows:

- the symbol is modulated by a spreading code during a spectrum spreading phase, in order to form a pulse stream, each pulse conventionally being denoted by the term "chip";
- each chip then passes through a forming filter, and is then modulated by a radiofrequency carrier during a radio modulation phase; each symbol is emitted with an energy $E_s$ which is the product of the energy $E_c$ of each chip within this symbol and a spreading factor, this spreading factor denoting the number of pulses per symbol.

A mobile station operating according to the CDMA technology is shown diagrammatically in figure 1. It comprises an information source 100 producing symbols to be transmitted, a spectrum spreading device 102, a radio modulation device 104 and an antenna 106.

In the remainder of the description of the state of the art, it is assumed that data transmitting stations are mobile stations of mobile radio systems and that data receiving stations in this same system are the base stations. Furthermore, it is assumed that several mobile stations transmit simultaneously to at least one base station. Using the CDMA technology, several mobile stations can transmit simultaneously on the same carrier frequency. Reception is then possible in the base station if the signals from the mobile stations are received with approximately equal values of the $E_s/I$ ratio, where I denotes the level of interference generated by mobile stations other than the mobile station then considered in communication. A measurement of this ratio defined in the 3GPP committee specifications is denoted SIR (Signal to Interference Ratio) in the rest of this description. Therefore, signals from mobile stations should be received with approximately constant SIR ratios equal to each other. In reality, signals from two mobile stations that do not provide the same services (telephony, data transport, etc.) do not need to be received with equal SIR ratios. This is why the base station has a target SIR ratio denoted $SIR_{target}$ for each mobile station. This ratio $SIR_{target}$ is identical for mobile stations supplying the same services. Therefore, each mobile station should be received by the base station with an SIR approximately equal to $SIR_{target}$ which is associated with the mobile station concerned.

In order to achieve this, the transmission of symbols is divided into time slots. Each time slot contains pilot symbols in addition to the data symbols. For each time slot, the base station estimates the SIR ratio in reception particularly using the pilot symbols, and transmits a TPC (Transmit Power Control) command to the mobile station. The TPC command is received and demodulated by the mobile station before the next time slot. The mobile station increases or reduces its transmission power as a function of the value of this command by means of a feedback loop. This power is usually expressed in decibels.

In order for mobile stations to better control their transmission power, the range of their transmission power must be very large, for example of the order of 80 dB, and they must be able to correct it with a relatively fine resolution, for example of the order of 1 dB. If signals from all mobile stations are to be received with SIR ratios approximately equal to the corresponding $SIR_{target}$ ratios, the mobile station should transmit with a power proportional to the distance separating the transmitting station from the receiving station in order to precisely compensate for the attenuation due to the route. In systems that do not use the CDMA technology, for example in a GSM network, a mobile station close to the base station can transmit "too strongly" without disturbing reception of signals from other mobile stations. This is not possible in CDMA since this mobile station would prevent reception of other mobile stations using the same radiofrequency carrier frequency.

Therefore, before producing symbols representing the transmission power from a mobile station, the mobile station must determine its transmission power. There are several known methods of doing this. Each known method is applied to a radiofrequency signal S' corresponding to a part of the radiofrequency signal S output from the radio modulator 104. For example, the radiofrequency signal S' is output from a passive coupler connected to the output of the radio modulator.

A first method consists of processing the radiofrequency signal output from the passive coupler with an envelope detection device. This envelope detection device is formed by putting a biased diode and a low pass filter in cascade. Such a prior art method is disclosed in US-A-5 287 555. The major disadvantage of this method is that the signal produced is only representative of the transmitted power for a radio modulation with a constant envelope. Therefore, it is not applicable to the 3GPP committee system which uses a radio modulation with a non-constant envelope. Furthermore, it cannot be used to process a very high power range. For very low transmission powers, the electrical current corresponding to the coupled radiofrequency signal is negligible compared with the bias current passing through the diode bias resistance. It is then impossible to differentiate the current rectified by the diode from its bias current.

A second method consists of demodulating the radiofrequency signal S' by a radio demodulation system performing the inverse function to the radio modulation system. However, the addition of this type of radio demodulation system has a number of disadvantages, particularly in terms of cost, size and energy consumption.

A third method consists of processing the radiofrequency signal S' by a logarithmic amplifier that can operate at high frequency. However, the use of this type of logarithmic amplifier is complex and therefore expensive.

Therefore, a purpose of the invention is to propose a method and a device capable of generating a base band signal representative of the power of a radiofrequency signal emitted by a transmitting station, this base band signal being useable to control the transmission power from the transmitting station over a wide dynamic range, while maintaining a fine resolution.

Thus, a subject of the invention is a method for generating a base band signal representative of the transmission power of a radiofrequency signal transmitted by a transmitting station, characterized in that it comprises the following steps:

- extract a part of said radiofrequency signal transmitted by said transmitting station;
- mix said part of the radiofrequency signal with itself to generate a voltage signal with at least a DC component;
- filter said voltage signal so as to keep only the DC component of said voltage signal, and
- amplify said filtered voltage signal using a logarithmic function,

to generate said base band signal representative of the transmission power of said radiofrequency signal transmitted by said transmitting station.

According to a first embodiment, the voltage signal filtering step is carried out using a low pass filter and the amplification step using a logarithmic function is carried out by a logarithmic amplifier.

According to a second embodiment, the voltage signal filtering step and the amplification step using a logarithmic function are carried out by the same logarithmic amplifier.

Preferably, the method is implemented in a transmitting station within a telecommunication system using a CDMA type multiple access technology.

Another subject of the invention is a device for generating a base band signal representative of the transmission power of a radiofrequency signal transmitted by a transmitting station, characterized in that it comprises:

- a passive coupler to extract a part of the radiofrequency signal transmitted by said transmitting station;
- a mixer to mix said part of the radiofrequency signal transmitted by the transmitting station with itself to generate a voltage signal with at least a DC component; and
- a logarithmic amplifier,

to generate, from said voltage signal, said base band signal representative of the transmission power of the radiofrequency signal transmitted by the transmitting station.

Advantageously, the device further comprises a low pass filter located between said mixer and said logarithmic amplifier to only allow the DC component of the voltage signal output from the mixer to pass.

Another subject of the invention is a transmitting station comprising a device like that described above and a telecommunication system comprising at least one such transmitting station, the telecommunication system being implemented within at least one telecommunication network belonging to the group comprising:

- GSM (Global System for Mobiles) telecommunication networks;
- PCS (Personal Communication System) telecommunication networks;
- UMTS (Universal Mobile Telecommunication System) telecommunication networks.

The characteristics and advantages of the invention will become clearer after reading the following description with reference to the attached drawings, among which :

- figure 1, already described, represents a block diagram of a known transmitting station ;
- figure 2 represents a device implementing the inventive method ; and
- figure 3 represents a variant embodiment of the device in figure 2.

Figure 2 shows a diagram of a device used to implement the method according to the invention. This device is placed in the transmitting station of figure 1. It is also considered that this station emits a radiofrequency signal S with power P.

The device according to the invention comprises firstly a passive coupler 200 that extracts a radiofrequency signal S' with power a.P from the radiofrequency signal S. The radiofrequency signal S' is input to a module 202. This module comprises a mixer 204 which is used to mix the radiofrequency signal S' with itself. In the mobile radio system proposed by the 3GPP committee, the radiofrequency signal S (or S') occupies a 5 MHz band around a carrier frequency $F_c$ between 1.920 and 1.980 GHz.

A radiofrequency signal S" is output from mixer 204, according to the following relation:

$$S''(t) = \beta.S'(t).S'(t)$$

where β represents the conversion gain of mixer 204. Since the signal S' is real, we have $S'(t) = S'^*(t)$ and therefore when β is equal to 1:

$$S''(t) = |S'(t)|^2$$

Therefore the signal S" is representative of the instantaneous power of the signal S' and therefore of the signal S. More particularly, the DC component of the signal S" is representative of the power of the radiofrequency signal S'. This DC component is extracted using a low pass filter 206. For the mobile radio system proposed by the 3GPP committee, the cutoff frequency at 3 dB from the low pass filter is typically of the order of 2 kHz. Note that the duration of a time slot is then approximately equal to 666.7 us (that is a frequency of 1.5 kHz for the time slots). Therefore, in order to obtain an estimate of the power transmitted during each time slot, a low pass filter with a cutoff frequency of the same order as the frequency of the time slots should be used.

The voltage signal output from the low pass filter 206, representing the transmission power of the radiofrequency signal S expressed in Watts, or on a multiple scale for example in mW, is then applied to the input of a logarithmic amplifier 208. One of the main functions of this logarithmic amplifier is to produce a magnitude $V_p$ representative of the transmitted power expressed on a logarithmic scale, for example in dBm, and no longer in mW, as can be seen on the output signal from the low pass filter 206. This logarithmic amplifier has the advantage that it has a wide dynamic input power range, for example of the order of 80 dB.

Note that the logarithmic amplifier 208 used in the device according to the invention is much less complex than the logarithmic amplifier presented in solutions known in prior art. The device acts on an input signal in the base band and with a small bandwidth, for example of the order of 1 kHz. In other words, the logarithmic amplifier 208 operates at least at low frequencies. The signal obtained at the output from the logarithmic amplifier 208 is representative of the transmitted power expressed for example in dBm, in other words the logarithm of the transmitted power expressed in mW. Thus, the signal obtained is input for example to a feedback loop controlling the transmission power of the transmitting station.

This type of device has the particular advantage that it can supply a base band signal capable of varying approximately linearly as a function of the transmission power of the transmitted radiofrequency signal S.

This type of device may be used in any type of transmitting station, and particularly in a base station and/or a mobile station of a mobile radio telecommunication system.

In particular, the mobile radio telecommunication system may be used in one or more GSM, PCS and/or UMTS type telecommunication networks.

As shown in figure 3, a variant embodiment could include a logarithmic amplifier 208 with a sufficiently low cut off frequency, within a module 302. This type of logarithmic amplifier 208 with a sufficiently low cutoff frequency would then make it possible to eliminate the low pass filter 206 in module 202 (see figure 2).

## Claims

**1.** Method for generating a base band signal (Vp) representative of the transmission power of a radiofrequency signal (S) transmitted by a transmitting station, **characterized in that** it comprises the following steps:

- extract a part (S') of said radiofrequency signal (S) transmitted by said transmitting station;
- mix said part of the radiofrequency signal (S') with itself to generate a voltage signal (S") with at least a DC component;
- filter said voltage signal (S") so as to keep only the DC component of said voltage signal, and
- amplify said filtered voltage signal using a logarithmic function,

to generate said base band signal (Vp) representative of the transmission power of said radiofrequency signal transmitted by said transmitting station.

**2.** Method according to claim 1, **characterized in that** the voltage signal (S") filtering step and the amplification step using a logarithmic function are carried out by the same logarithmic amplifier (208).

**3.** Method according to claim 1, **characterized in that** said filtering step of the voltage signal (S") is carried out by a low pass filter (206) and said amplification step using a logarithmic function is carried out by a logarithmic amplifier (208).

**4.** Method according to any of claims 1 to 3, **characterized in that** it is implemented in a transmitting station within a telecommunication system using a CDMA type multiple access technology.

**5.** Application of the method according to any of claims 1 to 4 for controlling the transmission power of a transmitting station, **characterized in that** the base band signal generated by said method is supplied to a feedback loop controlling the transmission power from said transmitting station.

**6.** Device for generating a base band signal (Vp) representative of the transmission power of a radiofrequency signal (S) transmitted by a transmitting station, **characterized in that** it comprises:

- a passive coupler (200) to extract a part (S') of the radiofrequency signal (S) transmitted by said transmitting station;
- a mixer (204) to mix said part (S') of the radiofrequency signal (S) transmitted by the transmitting station with itself to generate a voltage signal (S") with at least a DC component; and
- a logarithmic amplifier (208),

to generate, from said voltage signal (S"), said base band signal (Vp) representative of the transmission power of the radiofrequency signal (S) transmitted by the transmitting station.

**7.** Device according to claim 6, **characterized in that** it further comprises a low pass filter (206) located between said mixer (204) and said logarithmic amplifier (208) to only allow the DC component of the voltage signal (S") output from the mixer (204) to pass.

**8.** Transmitting station within a telecommunication system, **characterized in that** it comprises a device according to claim 6 or 7.

**9.** Transmitting station according to claim 8, **characterized in that** it is a base station or a mobile station within said telecommunication system.

**10.** Telecommunication system comprising at least one transmitting station according to claim 8 or 9, **characterized in that** it is implemented within at least one telecommunication network belonging to the group comprising:

- GSM telecommunication networks,
- PCS telecommunication networks,
- UMTS telecommunication networks.

## Patentansprüche

**1.** Verfahren zum Erzeugen eines Basisbandsignals (Vp), das für die Übertragungsleistung eines HF-Signals (S) repräsentativ ist, das von einer Sendestation gesendet wird,
**dadurch gekennzeichnet,**
**daß** das Verfahren die folgenden Schritte aufweist:

- Extrahieren eines Teils (S') des von der Sendestation gesendeten HF-Signals (S);
- Mischen des genannten Teils des HF-Signals (S') mit sich selbst, um ein Spannungssignal (S") zumindest mit einer Gleichstromkomponente zu erzeugen;
- Filtern des Spannungssignals (S"), um nur die Gleichstromkomponente des Spannungssignals zu behalten, und
- Verstärken des gefilterten Spannungssignals unter Anwendung einer logarithmischen Funktion,

um das Basisbandsignal (Vp) zu erzeugen, das für die Sendeleistung des von der Sendestation gesendeten HF-Signals repräsentativ ist.

**2.** Verfahren nach Anspruch 1,
**dadurch gekennzeichnet,**
**daß** der Schritt des Filterns des Spannungssignals (S") und der Verstärkungsschritt unter Anwendung einer logarithmischen Funktion von demselben logarithmischen Verstärker (208) ausgeführt werden.

**3.** Verfahren nach Anspruch 1,
**dadurch gekennzeichnet,**
**daß** der Schritt des Filterns des Spannungssignal (S") von einem Tiefpaßfilter (206) ausgeführt wird und der Verstärkungsschritt unter Anwendung einer logarithmischen Funktion von einem logarithmischen Verstärker (208) ausgeführt wird.

**4.** Verfahren nach einem der Ansprüche 1 bis 3,
**dadurch gekennzeichnet,**
**daß** es in einer Sendestation innerhalb eines Telekommunikationssystems unter Anwendung einer Vielfachzugriffstechnologie vom CDMA-Typ implementiert wird.

**5.** Anwendung des Verfahrens nach einem der Ansprüche 1 bis 4 zum Steuern der Übertragungsleistung einer Sendestation,
**dadurch gekennzeichnet,**
**daß** das mit dem Verfahren erzeugte Basisbandsignal einer Rückkopplungsschleife zugeführt wird, die die Übertragungsleistung von der Sendestation steuert.

**6.** Vorrichtung zum Erzeugen eines Basisbandsignals (Vp), das für die Übertragungsleistung eines HF-Signals (S) repräsentativ ist, das von einer Sendestation gesendet wird,
**dadurch gekennzeichnet,**
**daß** die Vorrichtung folgendes aufweist:

- einen passiven Koppler (200), um einen Teil (S') des von der Sendestation gesendeten HF-Signals (S) zu extrahieren;
- einen Mischer (204), um den genannten Teil (S') des von der Sendestation gesendeten HF-Signals (S) mit sich selbst zu mischen, um ein Spannungssignal (S") zumindest mit einer Gleichstromkomponente zu erzeugen; und
- einen logarithmischen Verstärker (208),

um aus dem Spannungssignal (S") das Basisbandsignal (Vp) zu erzeugen, das für die Übertragungsleistung des von der Sendestation gesendeten HF-Signals (S) repräsentativ ist.

**7.** Vorrichtung nach Anspruch 6,
**dadurch gekennzeichnet,**
**daß** sie ferner ein Tiefpaßfilter (206) aufweist, das zwischen dem Mischer (204) und dem logarithmischen Verstärker (208) angeordnet ist, um nur die Gleichstromkomponente des von dem Mischer abgegebenen Spannungssignals (S") durchzulassen.

**8.** Sendestation innerhalb eines Telekommunikationssystems,
**dadurch gekennzeichnet,**
**daß** sie eine Vorrichtung nach Anspruch 6 oder 7 aufweist.

**9.** Sendestation nach Anspruch 8,
**dadurch gekennzeichnet,**
**daß** sie eine Basisstation oder eine Mobilstation innerhalb des Telekommunikationssystems ist.

**10.** Telekommunikationssystem, das mindestens eine Sendestation nach Anspruch 8 oder 9 aufweist,
**dadurch gekennzeichnet,**
**daß** es innerhalb mindestens eines Telekommunikationsnetzes implementiert ist, das zu der Gruppe gehört, die folgendes umfaßt:

- GSM-Telekommunikationsnetze,
- PCS-Teiekommunikationsnetze,
- UMTS-Teiekommunikationsnetze.

**Revendications**

**1.** Procédé de génération d'un signal en bande de base (Vp) représentatif de la puissance d'émission d'un signal radiofréquence (S) émis par une station émettrice, **caractérisé en ce qu'**il comporte les étapes suivantes:

- extraire une partie (S') dudit signal radiofréquence (S) émis par ladite station émettrice;
- mélanger ladite partie de signal radiofréquence (S') avec elle-même pour générer un signal de tension (S") ayant au moins une composante continue;
- filtrer ledit signal de tension (S") de manière à ne conserver que la composante continue dudit signal de tension, et
- amplifier selon une fonction logarithmique ledit signal de tension filtré,

pour générer ledit signal en bande de base (Vp) représentatif de la puissance d'émission dudit signal radiofréquence émis par ladite station émettrice.

**2.** Procédé selon la revendication 1, **caractérisé en ce que** ladite étape de filtrage du signal de tension (S") et ladite étape d'amplification selon une fonction logarithmique sont réalisées par un même amplificateur (208) logarithmique.

**3.** Procédé selon la revendication 1, **caractérisé en ce que** ladite étape de filtrage du signal de tension (S") est réalisée par un filtre (206) passe-bas et ladite étape d'amplification selon une fonction logarithmique est réalisée par un amplificateur (208) logarithmique.

**4.** Procédé selon l'une des revendications 1 à 3, **caractérisé en ce qu'**il est mis en oeuvre dans une station émettrice d'un système de télécommunication utilisant une technique d'accès multiple de type CDMA.

**5.** Application du procédé selon l'une des revendications 1 à 4 pour le contrôle de la puissance d'émission d'une station émettrice, **caractérisée en ce que** le signal en bande de base généré par ledit procédé est fourni à une boucle d'asservissement de la puissance d'émission de ladite station émettrice.

**6.** Dispositif de génération d'un signal en bande de base (Vp) représentatif de la puissance d'émission d'un signal radiofréquence (S) émis par une station émettrice, **caractérisé en ce qu'**il comporte :

- un coupleur passif (200) pour extraire une partie (S') du signal radiofréquence (S) émis par ladite station émettrice ;
- un mélangeur (204) pour mélanger ladite partie (S') du signal radiofréquence (S) émis par la station émettrice avec elle-même pour générer un signal de tension (S") ayant au moins une composante continue; et
- un amplificateur (208) logarithmique

pour générer ledit signal en bande de base (Vp) représentatif de la puissance d'émission du signal radiofréquence (S) émis par la station émettrice à partir dudit signal de tension (S").

**7.** Dispositif selon la revendication 6, **caractérisé en ce qu'**il comporte en outre un filtre (206) passe-bas disposé entre ledit mélangeur (204) et ledit amplificateur (208) logarithmique pour ne laisser passer que la composante continue du signal de tension (S") issu du mélangeur (204).

**8.** Station émettrice d'un système de télécommunication, **caractérisée en ce qu'**elle comporte un dispositif selon la revendication 6 ou 7.

**9.** Station émettrice selon la revendication 8, **caractérisée en ce qu'**il s'agit d'une station de base ou d'une station mobile dudit système de télécommunication.

**10.** Système de télécommunication comprenant au moins une station émettrice selon la revendication 8 ou 9, **caractérisé en ce qu'**il est mis en oeuvre au sein d'au moins un réseau de télécommunication appartenant au groupe comprenant :

- les réseaux de télécommunication GSM;
- les réseaux de télécommunication PCS;
- les réseaux de télécommunication UMTS.

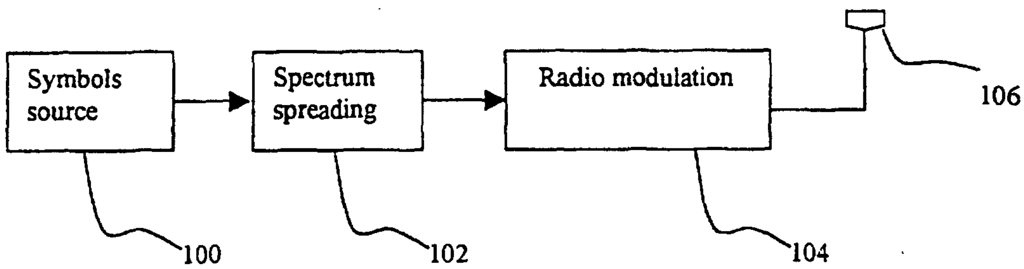
Symbols source
Spectrum spreading
Radio modulation
106
100
102
104

FIG 1

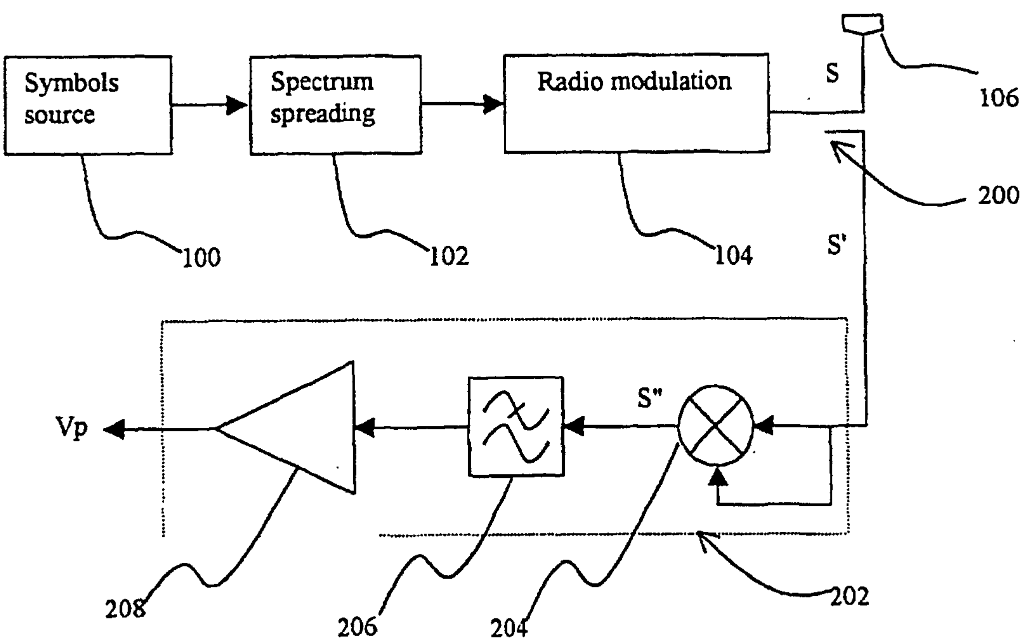
Symbols source
Spectrum spreading
Radio modulation
S
106
200
100
102
104
S'
S"
Vp
208
206
204
202

FIG.2

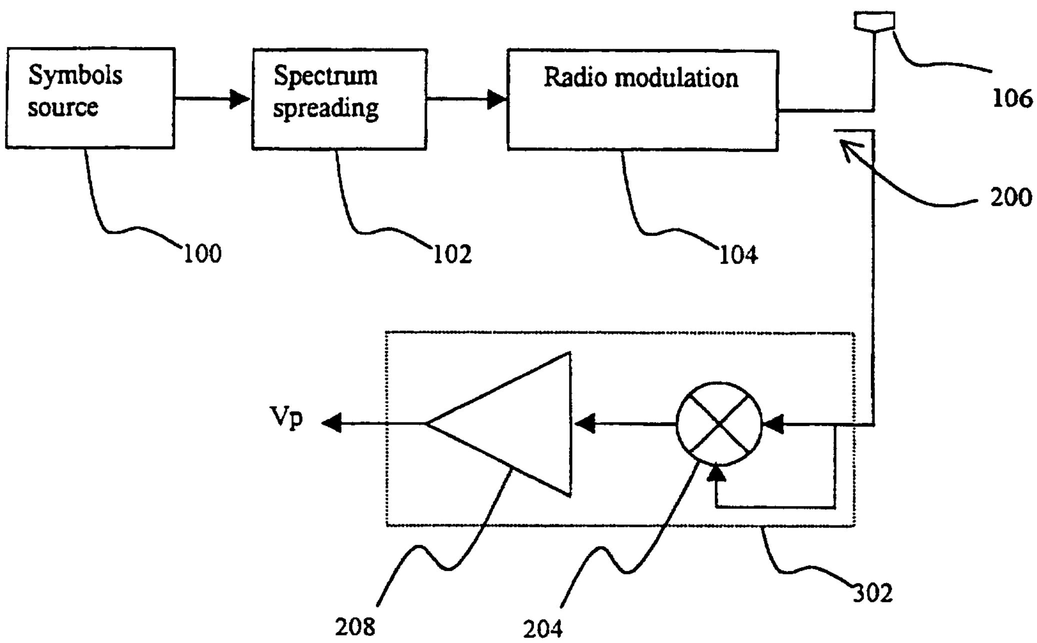
Symbols source
Spectrum spreading
Radio modulation
106
200
100
102
104
Vp
208
204
302

FIG.3